# EUROPEAN PATENT APPLICATION

(11) **EP 3 552 970 A1**
(43) Date of publication of application: **16.10.2019**
(21) Application number: 17878852.7
(22) Date of filing: 21.09.2017
(51) Int. Cl.: B64D 23/00, G09B 9/00, A63G 31/00

(54) **FREEFALL TRAINING APPARATUS AND TRAINING METHOD USING SAME**

(30) Priority: 07.12.2016 KR 20160165487
(71) Applicant: N-SKY Co., LTD, Gyeonggi-do 14087 (KR)
(72) Inventor: YEOM, Do Ho, Chuncheon-si Gangwon-do 24225 (KR)
(74) Representative: Davies, Gregory Mark
(86) International application number: PCT/KR2017/010373
(87) International publication number: WO 2018/105866

(57) **Abstract**

Disclosed herein are a free-fall training apparatus and a training method using the same. The free-fall training apparatus according to an embodiment of the present invention includes a supporter installed in parallel with an installation surface, a driver configured to adjust a slope of the supporter, apply impact or vibration to the supporter, or rotate the supporter, a plurality of strings configured to connect the body of a trainee to the supporter, a pulley installed at the supporter and configured to adjust lengths of the strings according to rotation, a detector configured to detect a position and a movement of the body of the trainee, and a controller configured to control the driver and the pulley on the basis of information input from the detector, wherein the trainee is moved upward or downward according to a posture of the trainee.

## Description

### Field of the Invention

The present invention relates to a free-fall training apparatus, and more particularly, to a free-fall training apparatus and a training method using the same capable of moving or rotating the body of a trainee according to a posture of the trainee.

### Discussion of Related Art

Generally, in drop training, a drop trainee (hereinafter referred to as "trainee") rides on an aircraft or a helicopter and is trained to land on the ground by jumping off from the aircraft or the helicopter at a certain altitude.

For such training, it is most desirable that a drop trainee ride on an actual aircraft or helicopter and be trained to jump off from the aircraft or helicopter at a certain altitude. However, since the cost of operating an aircraft or a helicopter is high, it is difficult to frequently operate the aircraft or helicopter, and thus drop training using an actual aircraft or helicopter is difficult to perform frequently. Also, in adverse weather conditions, since it is impossible to take off or land an aircraft or a helicopter, drop training cannot be performed.

In addition, when an unskilled drop trainee rides on an actual aircraft or helicopter and is trained to jump off from the aircraft or helicopter, since the drop trainee's life may be put at risk due to a momentary mistake, continuous simulation drop-training is necessary until the drop trainee becomes skilled under the same conditions as those of drop training performed using an actual aircraft or helicopter.

In order to solve such problems, in recent years, simulation drop-training apparatuses that allow drop training to be performed on the ground without using an aircraft or a helicopter in similar conditions as actually jumping-off from a high altitude have been developed.

A simulation training apparatus for drop training is configured so that, by installing a virtual simulator on the ground, training may be performed under realistic conditions without operating an aircraft or a helicopter. The simulation training apparatus allows training to be performed even in situations in which it is impossible to take off or land an aircraft or a helicopter due to adverse weather conditions. Also, the simulation training apparatus has advantages in that, since it is possible to prevent accidents that may occur during drop training using an aircraft or a helicopter, even an unskilled person may receive drop training and that aviation fuel for operating an aircraft or a helicopter may be saved.

### Disclosure

### Technical Problem

The present invention has been devised to solve the above-described conventional problems, and objectives of the present invention are as follow.

First, the present invention is directed to providing a free-fall training apparatus and a training method using the same capable of allowing a trainee to feel similar to an actual free-fall situation.

Second, the present invention is directed to providing a free-fall training device and a training method using the same capable of moving or rotating a trainee according to a posture of the trainee, thereby allowing the trainee to experience moving or rotating of the body according to a posture of the trainee during actual free fall.

Objectives of the present invention are not limited to those mentioned above, and other unmentioned objectives should be clearly understood by those of ordinary skill in the art from the description below.

### Technical Solution

In order to achieve the above objectives, a free-fall training apparatus according to an embodiment of the present invention includes a supporter, a driver, a string, a pulley, a detector, and a controller.

The supporter may be installed in parallel with an installation surface.

The driver may be configured to adjust a slope of the supporter or apply impact or vibration to the supporter.

The string may be configured to connect the body of a trainee to the supporter.

The pulley may be installed at the supporter and configured to adjust a length of the string according to rotation.

The detector may be configured to detect a position and a movement of the body of the trainee.

The controller may be configured to control the driver and the pulley on the basis of information input from the detector.

In this way, the free-fall training apparatus according to the present embodiment may move the trainee upward or downward according to a posture of the trainee.

A sensor configured to detect a movement of joints of the body of the trainee may be applied as the detector.

The controller may, on the basis of the information input from the detector, move the trainee downward by winding the pulley and increasing the length of the string when it is determined that the center of the body of the trainee has become relatively lower due to retroflexion of the spine of the trainee in a free-fall posture and may move the trainee upward by unwinding the pulley and decreasing the length of the string when it is determined that the center of the body of the trainee has become relatively higher due to anteflexion of the spine of the trainee in the free-fall posture.

The free-fall training apparatus according to the present embodiment may further include a mover configured to move the supporter forward, rearward, leftward, and rightward or rotate the supporter, wherein the controller may control the mover on the basis of information input from the detector, thereby moving or rotating the trainee according to a posture of the trainee.

The controller may, on the basis of the information input from the detector, control the driver and the mover according to a movement of an arm of the trainee and twisting of the torso of the trainee so that the trainee rotates.

The controller may, on the basis of the information input from the detector, control the driver and the mover to move the trainee forward or rearward according to slopes of the upper and lower bodies of the trainee.

The controller may, on the basis of the information input from the detector, control the driver and the mover to move the trainee leftward or rightward according to left and right slopes of the body of the trainee.

A free-fall training method according to an embodiment of the present invention includes a floating step, a free-fall experiencing step, and an upward-downward moving step.

In the floating step, a string may be connected to the body of a trainee, and a length of the string may be adjusted using a pulley so that the trainee is adjusted to take a free-fall posture.

In the free-fall experiencing step, while the trainee is floating in the air, a driver may be operated so that a slope of the body of the trainee is changed as in an actual free-fall situation or vibration and impact applied to the body of the trainee are adjusted.

In the upward-downward moving step, when the center of the body of the trainee moves upward or downward due to retroflexion or anteflexion of the spine of the trainee in the free-fall posture, the length of the string may be adjusted using the pulley so that the trainee ascends or descends.

The free-fall training method according to the present embodiment may further include at least one of a rotating step, a forward-rearward moving step, and a leftward-rightward moving step.

In the rotating step, when the trainee simultaneously pulls an arm toward the torso and twists the body toward one side in the free-fall posture, the driver may be operated to allow the trainee to rotate.

In the forward-rearward moving step, when the trainee changes the slopes of the upper and lower bodies in the free-fall posture, the driver may be operated to allow the trainee to move forward or rearward.

In the leftward-rightward moving step, when the trainee changes left and right slopes of the body in the free-fall posture, the driver may be operated to allow the trainee to move leftward and rightward.

All of the above-mentioned steps may include a process in which a trainer checks by visual inspection whether the trainee is taking a proper posture and instructs the trainee to take the proper posture.

### Advantageous Effects

Advantageous effects of the present invention configured as above are as follow.

First, according to the free-fall training apparatus and training method using the same according to an embodiment of the present invention, a controller controls a driver and a pulley to move and rotate a trainee upward, downward, forward, rearward, leftward, and rightward according to a movement of the body of the trainee detected by a detector, thereby allowing the trainee to experience in advance a direction in which the body moves or rotates according to a movement of the trainee in an actual free-fall situation.

Second, according to the free-fall training apparatus and training method using the same according to an embodiment of the present invention, when a trainer checks a posture of a trainee and points out a wrong posture when the posture is wrong, the trainee may correct the posture and take a correct posture.

Advantageous effects of the present invention are not limited to those mentioned above, and other unmentioned advantageous effects should be clearly understood by those of ordinary skill in the art from the claims below.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating a state in which a trainee takes a free-fall posture by a free-fall training apparatus according to an embodiment of the present invention;
FIG. 2 is a view illustrating a state in which the trainee takes an upward-moving posture by the free-fall training apparatus according to an embodiment of the present invention;
FIG. 3 is a view illustrating a state in which the trainee takes a downward-moving posture by the free-fall training apparatus according to an embodiment of the present invention;
FIG. 4 is a view illustrating a state in which the trainee takes a rotating posture by the free-fall training apparatus according to an embodiment of the present invention;
FIG. 5 is a view illustrating a state in which the trainee takes a forward-moving posture by the free-fall training apparatus according to an embodiment of the present invention;
FIG. 6 is a view illustrating a state in which the trainee takes a rearward-moving posture by the free-fall training apparatus according to an embodiment of the present invention; and
FIG. 7 is a view illustrating a state in which the trainee takes a rightward-moving posture by the free-fall training apparatus according to an embodiment of the present invention.

### DETAILED DESCRIPTION OF EXEMPLARY EMBODIMENTS

Hereinafter, embodiments of the present invention will be described in detail with reference to the accompanying drawings. Those of ordinary skill in the art should easily understand that the accompanying drawings are described merely to facilitate the disclosure of the present invention and are not intended to limit to scope of the present invention.

In describing the embodiments of the present invention, the same names and reference numerals are used for elements having the same function, and note that the elements of the present invention are not exactly the same as elements of the related art substantially.

Terms used herein are merely for describing specific embodiments and are not intended to limit the present invention. A singular expression includes a plural expression unless the context clearly indicates otherwise. In the application, terms such as "include" or "have" should be understood as designating that features, number, steps, operations, elements, parts, or combinations thereof exist and not as precluding the existence of or the possibility of adding one or more other features, numbers, steps, operations, elements, parts, or combinations thereof in advance.

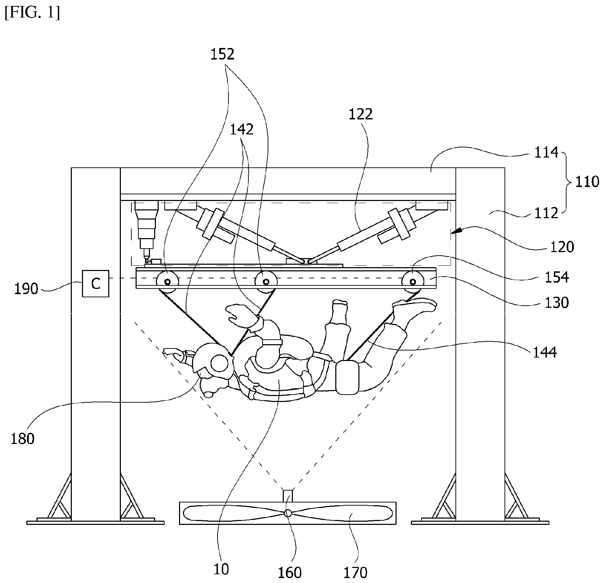

Hereinafter, a free-fall training apparatus according to an embodiment of the present invention will be described with reference to FIGS. 1 to 7.

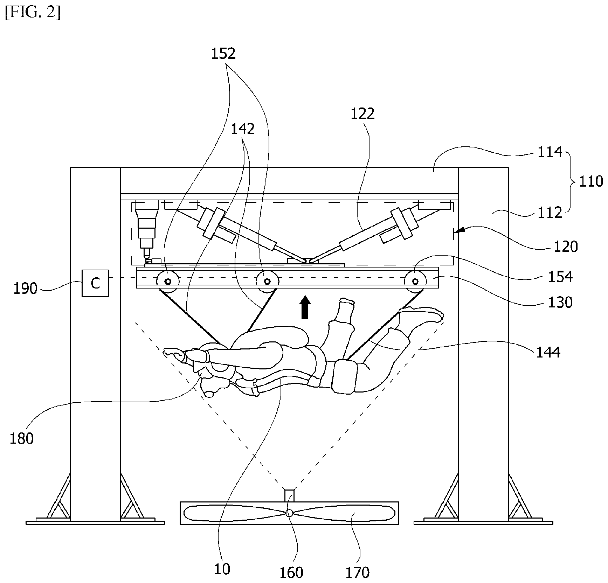

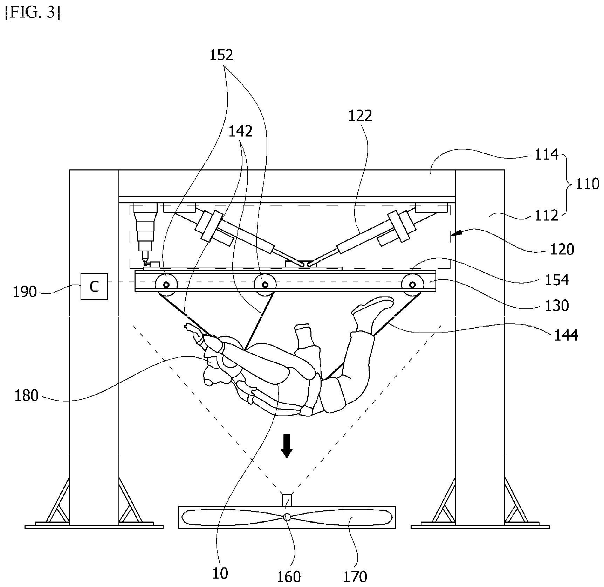

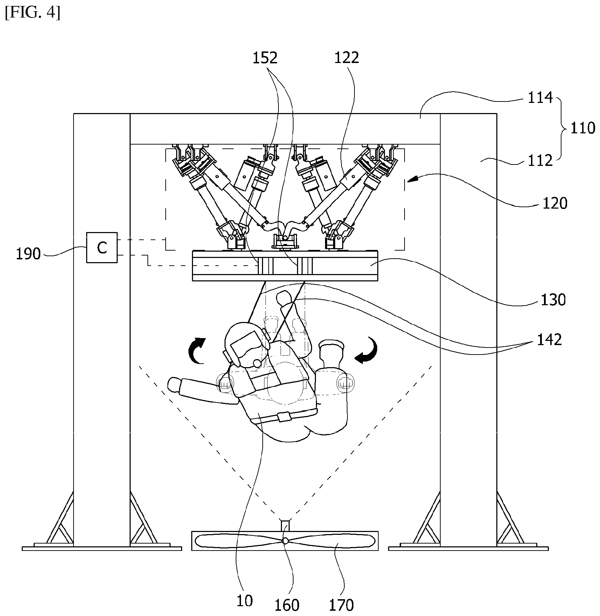

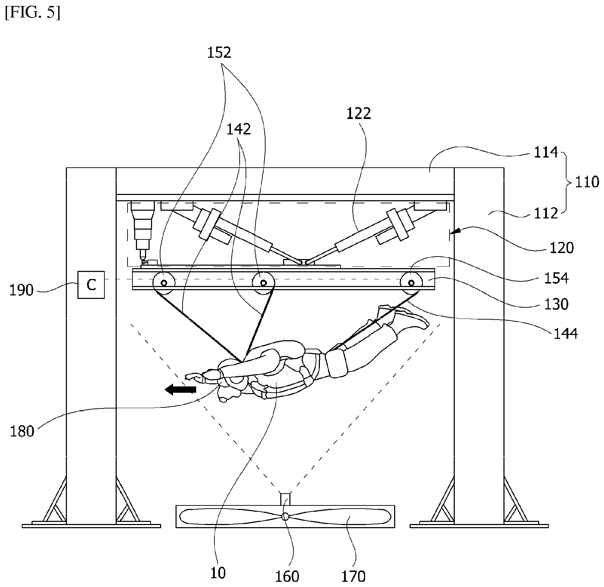

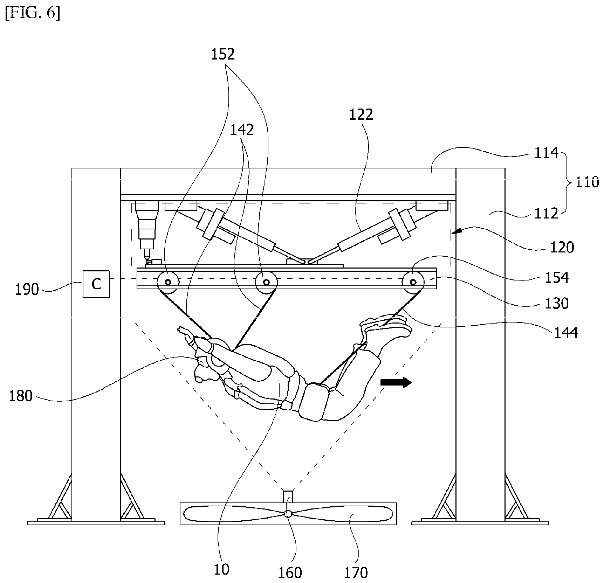

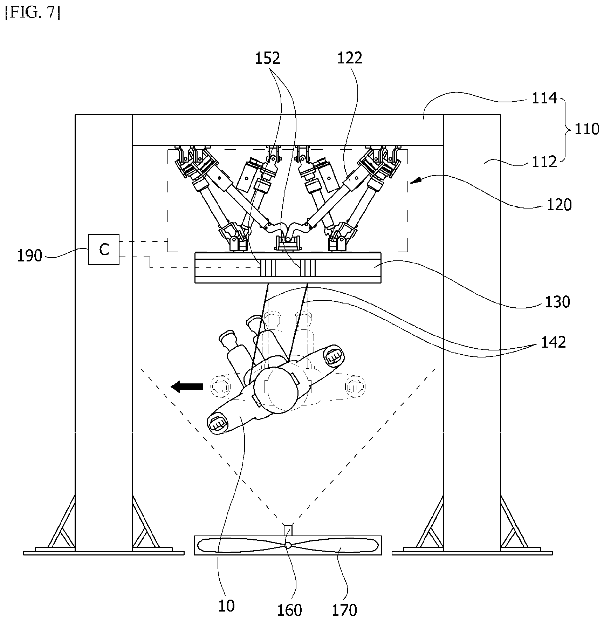

FIG. 1 is a view illustrating a state in which a trainee takes a free-fall posture by a free-fall training apparatus according to an embodiment of the present invention, FIG. 2 is a view illustrating a state in which the trainee takes an upward-moving posture by the free-fall training apparatus according to an embodiment of the present invention, FIG. 3 is a view illustrating a state in which the trainee takes a downward-moving posture by the free-fall training apparatus according to an embodiment of the present invention, FIG. 4 is a view illustrating a state in which the trainee takes a rotating posture by the free-fall training apparatus according to an embodiment of the present invention, FIG. 5 is a view illustrating a state in which the trainee takes a forward-moving posture by the free-fall training apparatus according to an embodiment of the present invention, FIG. 6 is a view illustrating a state in which the trainee takes a rearward-moving posture by the free-fall training apparatus according to an embodiment of the present invention, and FIG. 7 is a view illustrating a state in which the trainee takes a rightward-moving posture by the free-fall training apparatus according to an embodiment of the present invention.

As illustrated in FIGS. 1 to 7, the free-fall training apparatus according to an embodiment of the present invention includes a support frame 110, a driver 120, a mover (not illustrated), a supporter 130, strings 142 and 144, pulleys 152 and 154, and a controller 190.

The support frame 110 is an element fixed to an installation surface and configured to support other elements with respect to the installation surface. In the present embodiment, the support frame 110 may include a pair of vertical frames 112 and a horizontal frame 114 disposed between the pair of vertical frames 112.

The controller 190 may be embedded in the support frame 110 or installed outside the support frame 110. Various programs for operating the driver 120, which will be described below, and the pulleys 152 and 154, which will be described below, may be embedded in the controller 190, and the driver 120 or the pulleys 152 and 154 may be controlled by programs being executed according to various signals input to the controller 190.

The driver 120 is an element disposed between the horizontal frame 114 and the supporter 130 and configured to adjust a slope of the supporter 130 or apply impact or vibration to the supporter 130 according to a signal output from the controller 190. Alternatively, the driver 120 may rotate the supporter 130, which will be described below, by a predetermined angle about a rotation axis in a vertical direction.

Generally, the driver 120 is a device configured to cause a trainee 10 to feel a sense of real experience in a directed situation. By an operation in which the driver 120 is tilted or moved upward or downward, the trainee 10 may feel as if he or she is actually participating in a car race or riding on a combat plane. To this end, movements that one may actually experience while participating in a car race or riding on a combat plane may be implemented by utilizing a mechanical degree of freedom. Generally, a hydraulic pressure, an electric motor, a pneumatic pressure, and the like may be used as a driving force for moving the driver 120.

Specifically, the driver 120 according to the present invention is configured to deliver the human body response similar to that in actual drop training to the trainee 10. The driver 120 is a motion base formed of six actuators 122, wherein distal ends of the actuators 122 connected to the supporter 130 are installed to be connected to the horizontal frame 114 so that the distal ends face downward. A side surface of the horizontal frame 114 is stably supported by the support frame 110 at an outer boundary thereof.

The six actuators 122 are configured as follows. Two actuators 122 form a pair so that, while lower ends thereof are connected to the horizontal frame 114, distal ends thereof are connected to each other. Three pairs of actuators 122 constitute three groups. Here, the distal ends of the three groups of actuators 122 are formed of three points which constitute a triangular shape in a plan view, like a connecting portions between the driver 120 and the supporter 130, and are connected to three points of the supporter 130 by a hinge shaft.

Although the motion base formed of the six actuators 122 is described as an embodiment in the present invention, the present invention is not limited thereto, and, for example, a four-axis, eight-axis, or nine-axis driver 120 may also be applied.

Alternatively, a motor (not illustrated) may be applied as the driver 120, and, according to an operation of the motor (not illustrated), the supporter 130 may vibrate, impact may be applied to the supporter 130, or the supporter 130 may be rotated by a predetermined angle. Since the driver 120 is a known technology, a more detailed description thereof will be omitted.

The supporter 130 is installed at the horizontal frame 114 so as to be parallel with an installation surface in an initial state. A slope and a height of the supporter 130 are adjusted by the driver 120, and, by an operation of the driver 120, the supporter 130 may deliver the human body response similar to that in actual free-fall training to the trainee 10. The supporter 130 may be formed in various shapes including a polygonal shape such as triangular, quadrangular, and hexagonal or a circular shape.

The mover (not illustrated) is an element configured to move the supporter 130 forward, rearward, leftward, and rightward so that the trainee 10 is moved as a result. The mover (not illustrated) may be disposed between the driver 120 and the horizontal frame and move the supporter 130 connected to the driver 120 according to a signal output from the controller 190. In order to move the supporter 130, the mover (not illustrated) may include a moving plate on which the driver 120 is directly installed and a guide rail provided between the moving plate and the horizontal frame 114 and configured to guide movement of the moving plate.

As the guide rail, a pair of guide rails may be disposed perpendicular to each other in order to guide forward, rearward, leftward, and rightward movements of the moving plate. Also, a motor may be provided in the guide rail so as to provide a driving force to the moving plate.

In this way, the moving plate may move forward, rearward, leftward, and rightward along the guide rail according to a signal output from the controller 190.

However, the configuration of the mover (not illustrated) is not limited to that described above, and the mover (not illustrated) may be configured in any other way as long as the configuration is capable of moving the supporter 130 forward, rearward, leftward, and rightward.

Meanwhile, in the present embodiment, the strings 142 and 144 connect the body of the trainee 10 to the supporter 130. In the present embodiment, the strings may include first strings 142 configured to connect the upper body of the trainee 10 to the supporter 130 and second strings 144 configured to connect the lower body of the trainee 10 to the supporter 130. In the present embodiment, the first strings 142 may be connected to the shoulders of the trainee 10, and the second strings 144 may be connected to the legs of the trainee 10. However, the connection positions of the first strings 142 and the second strings 144 are not limited to those described above, and the first strings 142 and the second strings 144 may be connected to any other parts of the body as long as interference with a movement of the trainee 10 does not occur while the load of the body of the trainee 10 is stably supported.

Generally, four first strings 142 may be disposed, and the second string 144 may be connected to each of both legs of the trainee 10. However, the numbers of first strings 142 and second strings 144 are not limited thereto, and any other numbers of first strings 142 and second strings 144 may be provided as long as the first strings 142 and the second strings 144 stably support the trainee 10 and are capable of smoothly adjusting the body of the trainee 10.

Therefore, operations of the driver 120 are delivered to the trainee 10 through the first strings 142 and the second strings 144 via the supporter 130, and the entire training process, which includes jumping off from an actual aircraft or helicopter, floating in the air in a free-fall state, and landing on the ground, may be performed on the ground realistically as actual training.

For example, since the human body responses similar to those during an actual free-fall such as shaking, rolling, pitching, receiving impact, and rotating are delivered to the trainee 10 through an operation of the driver 120 by control of the controller 190, the trainee 10 may experience actual drop training.

The pulleys 152 and 154 are installed at the supporter 130 and configured to adjust lengths of the strings 142 and 144 according to rotation. In the present embodiment, the pulleys may include first pulleys 152 configured to adjust the lengths of the first strings 142 according to unwinding rotation and second pulleys 154 configured to adjust the lengths of the second strings 144 according to rotation. Here, the first pulleys 152 are installed at the supporter 130. Also, although the case in which the second pulleys 154 are installed at the supporter 130 has been illustrated as an example in the drawings of the present embodiment, the second pulleys 154 may also be installed at one side of the support frame 110 other than being installed at the supporter 130.

The first pulleys 152 and the second pulleys 154 may be separately controlled by the controller 190 and adjust the slope or height of the body of the trainee 10 or adjust impact applied to the body of the trainee 10. In this way, various situations that may occur during an actual free-fall of the trainee 10 may be reproduced.

Meanwhile, the detector 160 may detect a position and a movement of the body of the trainee 10. For example, a sensor configured to detect a movement of the joints of the body of the trainee 10 may be applied as the detector 160.

Alternatively, a sensor configured to transmit an infrared wavelength and then measure time taken for receiving a signal that returns by being reflected from a subject may be applied as the detector 160, and a method in which the controller 190 calculates a distance from the subject on the basis of the time taken for receiving the signal may be applied. Alternatively, a gesture interface such as a method in which a projector projects a changing pattern, a camera captures an image on which the pattern is overlaid, and the controller 190 calculates a distance from the subject using the captured image may also be applied.

Since the above-mentioned gesture interface technology is a known technology, detailed description thereof will be omitted.

Also, a program for operating the pulleys 152 and 154, the driver 120, and the mover (not illustrated) according to each posture of the trainee 10 input via the detector 160 may be embedded in the controller 190.

For example, when, as illustrated in FIG. 2, the trainee 10 takes a posture in which the spine is retroflexed such that the navel moves downward in the free-fall posture during an actual free-fall, the trainee 10 may descend from the air at a higher speed. Therefore, when the trainee 10 takes such a posture during free-fall training, the detector 160 may detect the movement of the trainee 10 and output the detected movement to the controller 190, and the controller 190 may unwind the pulleys 152 and 154 according to the embedded program and increase the lengths of the strings 142 and 144 so that the trainee 10 descends.

Alternatively, when, as illustrated in FIG. 3, the trainee 10 takes a posture in which the spine is anteflexed such that the navel is pushed upward in the free-fall posture during an actual free-fall, the trainee 10 may descend from the air at a lower speed. Therefore, when the trainee 10 takes such a posture during free-fall training, the detector 160 may detect the movement of the trainee 10 and output the detected movement to the controller 190, and the controller 190 may wind the pulleys 152 and 154 according to the embedded program and decrease the lengths of the strings 142 and 144 so that the trainee 10 ascends.

Alternatively, when, as illustrated in FIG. 4, the trainee 10 twists the torso toward one side while pulling one arm toward the torso in the free-fall posture during an actual free-fall, the trainee 10 may rotate and change a direction of the body. Therefore, when the trainee 10 takes such a posture during free-fall training, the detector 160 may detect the movement of the trainee 10 and output the detected movement to the controller 190, and the controller 190 may operate the driver 120 according to the embedded program and rotate the supporter 130 so that the trainee 10 is rotated as a result.

Alternatively, when, as illustrated in FIG. 5, the trainee 10 changes the slope of the body and causes the height of the lower body to be relatively higher than the height of the upper body in the free-fall posture during an actual free-fall, the trainee 10 may move forward, and, when, as illustrated in FIG. 6, the trainee 10 causes the height of the upper body to be higher than the height of the lower body, the trainee 10 may move rearward. Therefore, when the trainee 10 takes such postures during free-fall training, the detector 160 may detect the movement of the trainee 10 and output the detected movement to the controller 190, and the controller 190 may operate the mover (not illustrated) according to the embedded program and move the supporter 130 forward or rearward so that the trainee 10 is moved forward or rearward as a result.

Alternatively, when, as illustrated in FIG. 7, the trainee 10 changes the slope of the body and causes the right side of the body to be lower than the left side of the body in the free-fall posture during an actual free-fall, the trainee 10 may move rightward. Also, although not illustrated in the drawings, when, conversely, the trainee 10 causes the left side of the body to be lower than the right side of the body, the trainee 10 may move leftward. Therefore, when the trainee 10 takes such postures during free-fall training, the detector 160 may detect the movement of the trainee 10 and output the detected movement to the controller 190, and the controller 190 may operate the mover (not illustrated) according to the embedded program and move the supporter 130 rightward or leftward so that the trainee 10 is moved rightward or leftward as a result.

In this way, when the free-fall training apparatus according to the present embodiment is used, by the controller 190 moving or rotating the trainee 10 by outputting a suitable signal for each movement of the trainee 10, the trainee 10 may experience in advance the change of direction, the speed control, and the like during an actual free-fall.

In addition, when the trainee 10 takes the free-fall posture illustrated in FIG. 1 again after moving or rotating, the controller 190 may stop operations of the pulleys 152 and 154, the driver 120, and the mover (not illustrated).

Meanwhile, the free-fall training apparatus according to the present embodiment may include an air blower 170 configured to generate wind toward the trainee 10 from below or beside the trainee 10 so that the trainee 10 can experience an actual falling situation more realistically. Particularly, during free-fall training of the trainee 10, the air blower 10 may generate strong upward wind from below the trainee 10 so that the trainee 10 feels a sense of floating in the air and feels as if he or she is descending from a high altitude and may help the trainee 10 take various postures easily.

Meanwhile, an emergency exit training apparatus according to the present embodiment may further include a simulation video player 180 in order to increase the sense of reality. Here, virtual reality (VR), a goggle with a monitor embedded therein, a large screen disposed in front of the trainee 10, a plurality of monitors surrounding the trainee 10, or the like may be applied as the simulation video player 180. In this way, the trainee 10 can feel a sense of realism as if he or she is actually being trained at a high altitude.

The simulation video player 180 may be electrically connected to the controller 190 and play a video according to a training situation. Also, when a suitable signal is input from an external input device to a video being played, the simulation video player 180 may play a video corresponding to the input signal.

For example, during drop training using the drop training simulation apparatus according to the present embodiment, at an initial stage, the simulation video player 180 may play a video of an aircraft before dropping.

When the trainee 10 jumps off at a predetermined point in time and takes a falling posture, the simulation video player 180 may play a falling video. Also, when the trainee 10 takes a specific posture to move or rotate the body, the simulation video player 180 may play a video suitable therefor.

Here, the simulation video player 180 may be linked to the driver 120 and the mover (not illustrated) by the controller 190, and the driver 120 and the mover (not illustrated) may deliver the vibration, impact, slope, movement, and the like corresponding to a simulation video to the trainee 10.

The free-fall training apparatus according to an embodiment of the present invention has been described above.

Hereinafter, a free-fall training method using the free-fall training apparatus according to an embodiment of the present invention will be described with reference to FIGS. 1 to 7.

The free-fall training method according to the present embodiment includes a floating step, a free-fall experiencing step, an upward-downward moving step, a rotating step, a forward-rearward moving step, and a leftward-rightward moving step.

In the floating step, first, while the first strings 142 and the second strings 144 are connected to the body of the trainee 10, when the trainee 10 jumps off, the first pulleys 152 and the second pulleys 154 are rotated to wind the first strings 142 and the second strings 144 so that the trainee 10 is lifted in the air as illustrated in FIG. 1.

In the free-fall experiencing step, while the trainee 10 is floating in the air as illustrated in FIG. 1, the driver 120 is operated to change the slope or height of the body of the trainee 10 or impact applied to the body of the trainee 10 is adjusted in order to reproduce various situations that may occur during an actual free-fall of the trainee 10.

Also, when the trainee 10 adjusts a descending speed or takes a specific posture to change the direction and position of the body during the free-fall experiencing step, the detector 160 may detect the movement or position of the trainee 10 and output the detected movement or position to the controller 190, and the controller 190 may determine the posture of the trainee 10 on the basis of the signal received via the detector 160 and execute a program suitable for each posture.

More specifically, in the upward-downward moving step, when, as illustrated in FIGS. 2 and 3, the trainee 10 takes a posture in which the spine is retroflexed such that the navel moves downward in the free-fall posture, the first pulleys 152 and the second pulleys 154 may be operated to unwind the first strings 142 and the second strings 144 so that the trainee 10 may descend. Alternatively, when the trainee 10 takes a posture in which the spine is anteflexed such that the navel moves upward in the free-fall posture, the first pulleys 152 and the second pulleys 154 may be operated to wind the first strings 142 and the second strings 144 so that the trainee 10 may ascend. In this way, the trainee 10 may be trained on ways of adjusting a descending speed during actual free-falling.

In the rotating step, when, as illustrated in FIG. 4, the trainee 10 twists the torso toward one side while pulling one arm toward the torso in the free-fall posture, the driver 120 may be operated to rotate the supporter 130 so that the trainee 10 connected to the supporter 130 also rotates together. In this way, the trainee 10 may be trained on ways of rotating the direction of the body during actual free-falling.

In the forward-rearward moving step, when, as illustrated in FIGS. 5 and 6, the trainee 10 changes the slope of the body and causes the height of the upper body to be relatively higher than the height of the lower body in the free-fall posture, the mover (not illustrated) may be operated to move the supporter rearward so that the trainee 10 also moves rearward. Alternatively, when the trainee 10 causes the height of the lower body to be higher than the height of the upper body in the free-fall posture, the mover (not illustrated) may be operated to move the supporter forward so that the trainee 10 also moves forward. In this way, the trainee 10 may be trained on ways of moving forward or rearward during actual free-falling.

In the leftward-rightward moving step, when, as illustrated in FIG. 7, the trainee 10 changes the slope of the body and causes the right side of the body to be lower than the left side of the body in the free-fall posture, the mover (not illustrated) may move the supporter rightward so that the trainee 10 also moves rightward. Alternatively, when the trainee 10 changes the slope of the body and causes the left side of the body to be lower than the right side of the body in the free-fall posture, the mover (not illustrated) may move the supporter leftward so that the trainee 10 also moves leftward. In this way, the trainee 10 may be trained on ways of moving rightward or leftward during actual free-falling.

Here, the upward-downward moving step, the rotating step, the forward-rearward moving step, and the leftward-rightward moving step may not be performed in the stated order, and the order may vary according to the posture of the trainee 10.

Also, all of the above-described steps may include a process in which a trainer (not illustrated) checks by visual inspection whether the trainee 10 is taking a proper posture and instructs the trainee 10 to take the proper posture.

Exemplary embodiments according to the present invention have been described above. It should be apparent to those of ordinary skill in the art that the present invention may be embodied in other specific forms in addition to the above-described embodiments without departing from the gist or scope of the present invention. Therefore, the above-described embodiments should be considered as illustrative instead of limitative. Accordingly, the present invention is not limited to the above description and may be changed within the scope of the attached claims and their equivalents.

## Claims

1. A free-fall training apparatus comprising:
a supporter installed in parallel with an installation surface;
a driver configured to adjust a slope of the supporter, apply impact or vibration to the supporter, or rotate the supporter about a rotation axis in a vertical direction;
a plurality of strings configured to connect the body of a trainee to the supporter;
a pulley installed at the supporter and configured to adjust lengths of the strings according to rotation;
a detector configured to detect a position and a movement of the body of the trainee; and
a controller configured to control the driver and the pulley on the basis of information input from the detector,
wherein the trainee is moved upward or downward according to a posture of the trainee.

2. The free-fall training apparatus of claim 1, wherein a sensor configured to detect a movement of joints of the body of the trainee is applied as the detector.

3. The free-fall training apparatus of claim 1, wherein, on the basis of the information input from the detector, the controller:
moves the trainee downward by controlling the pulley to increase the lengths of the strings when it is determined that the center of the body of the trainee has become relatively lower due to retroflexion of the spine of the trainee in a free-fall posture; and
moves the trainee upward by controlling the pulley to decrease the length of the string when it is determined that the center of the body of the trainee has become relatively higher due to anteflexion of the spine of the trainee in the free-fall posture.

4. The free-fall training apparatus of claim 1, further comprising a mover configured to move the supporter forward, rearward, leftward, and rightward,
wherein the controller controls the mover on the basis of information input from the detector, thereby moving or rotating the trainee according to a posture of the trainee.

5. The free-fall training apparatus of claim 4, wherein, on the basis of the information input from the detector, the controller controls the driver according to a movement of an arm of the trainee and twisting of the torso of the trainee so that the trainee rotates.

6. The free-fall training apparatus of claim 4, wherein, on the basis of the information input from the detector, the controller controls the driver and the mover to move the trainee forward or rearward according to slopes of the upper and lower bodies of the trainee.

7. The free-fall training apparatus of claim 4, wherein, on the basis of the information input from the detector, the controller controls the driver and the mover to move the trainee leftward or rightward according to left and right slopes of body of the trainee.

8. A free-fall training method comprising:
a floating step in which strings are connected to the body of a trainee and lengths of the strings are adjusted using a pulley so that the trainee is adjusted to take a free-fall posture;
a free-fall experiencing step in which, while the trainee is floating in the air, a driver is operated so that a slope of the body of the trainee is changed as in an actual free-fall situation or vibration and impact applied to the body of the trainee are adjusted; and
an upward-downward moving step in which, when the center of the body of the trainee moves upward or downward due to retroflexion or anteflexion of the spine of the trainee in the free-fall posture, the lengths of the strings are adjusted using the pulley so that the trainee ascends or descends.

9. The free-fall training method of claim 8, further comprising at least one of:
a rotating step in which, when the trainee simultaneously pulls an arm toward the torso and twists the body toward one side in the free-fall posture, the driver is operated to allow the trainee to rotate;
a forward-rearward moving step in which, when the trainee changes the slopes of the upper and lower bodies in the free-fall posture, the mover is operated to allow the trainee to move forward or rearward; and
a leftward-rightward moving step in which, when the trainee changes left and right slopes of the body in the free-fall posture, the mover is operated to allow the trainee to move leftward and rightward.

10. The free-fall training method of claim 8 or 9, wherein all of the steps include a process in which a trainer checks by visual inspection whether the trainee is taking a proper posture and instructs the trainee to take the proper posture.
